# EUROPEAN PATENT APPLICATION

(11) **EP 1 413 346 A1**
(43) Date of publication of application: **28.04.2004**
(21) Application number: 02751824.0
(22) Date of filing: 01.08.2002
(51) Int. Cl.: B01D 43/00, B01D 57/00, G01N 27/26, G01N 1/10, G01N 37/00

(54) **SEPARATION APPRATTUS AND PROCESS FOR FABRICATING SEPARATION APPRATUS**

(30) Priority: 03.08.2001 JP 2001237279; 15.05.2002 JP 2002140233
(71) Applicant: NEC Corporation, Minato-ku, Tokyo 108-8001 (JP)
(72) Inventor: IIDA, Kazuhiro NEC Corporation, Tokyo 108-8001 (JP); IGUCHI, Noriyuki NEC Corporation, Tokyo 108-8001 (JP); KAWAURA, Hisao NEC Corporation, Tokyo 108-8001 (JP); SANO, Toru NEC Corporation, Tokyo 108-8001 (JP); BABA, Masakazu NEC Corporation, Tokyo 108-8001 (JP); SOMEYA, Hiroko NEC Corporation, Tokyo 108-8001 (JP); SAKAMOTO, Toshitsugu NEC Corporation, Tokyo 108-8001 (JP)
(74) Representative: Patentanwälte Wenzel & Kalkoff
(86) International application number: PCT/JP2002/007854
(87) International publication number: WO 2003/013692

(57) **Abstract**

A separator has a specimen separating area comprising a number of recesses defined in an inner wall of a flow passage through which a specimen passes. For separating nucleic acids and proteins, the recesses have openings whose maximum diameter is 300 nm or less, and adjacent recesses are spaced at an average interval of 300 nm or less.

## Description

### Technical Field

The present invention relates to an apparatus for and a method of separating a specimen, and more particularly to an apparatus for and a method of separating any substances of various microscopic sizes, e.g., cells and nucleic acid fragments, organic molecules such as amino acids, peptides, and proteins, metal ions, colloids, and latex beads.

### Background Art

For analyzing biological substances such as cells, nucleic acids, and proteins, it is important to separate and refine the specimen in preparation for the analytic process. To meet such a need, it has widely been customary to employ separating techniques which use ultra centrifugal separators and capillary electrophoresis devices.

However, ultra centrifugal separators and capillary electrophoresis devices take a long time to separate the specimen, and need a large amount of specimen. These devices are not necessarily satisfactory as to the separating capability.

U. S. patent No. 5,837,115 discloses a sorting apparatus having an array of obstacles for fractionating cells, viruses, macromolecules, or minute particles. However, the disclosed sorting apparatus still remains to be improved with respect to the following disadvantages:
First, the sorting apparatus tends to be clogged by macromolecules or minute particles which are handled thereby, and its throughput cannot be increased beyond a certain limit because of the possible clogging.
Secondly, it has been difficult to reduce the spacing between the obstacles to a sufficient level because it is difficult to fabricate the obstacles accurately at small intervals. Particularly, it has been highly difficult at the time of the disclosed invention to fabricate the obstacles accurately at intervals of 200 nm or less. Therefore, the disclosed sorting apparatus has found its use in a limited range of applications.

### Disclosure of the Invention

It is therefore an object of the present invention to provide a separating apparatus which is capable of sorting a substance of small size in terms of a small quantity of specimen in a short period of time with an excellent separating capability, and which is less susceptible to clogging.

According to the present invention, there is provided a separator comprising a flow passage for a specimen to pass therethrough and a specimen separating area having a plurality of recesses defined in an inner wall of the flow passage.

According to the present invention, there is also provided a separator comprising a flow passage for a specimen, defined as a groove in a substrate, a specimen inlet for introducing the specimen into the flow passage, a specimen separating area disposed in the flow passage and having a plurality of recesses defined in an inner wall of the flow passage, and a specimen retriever for analyzing or dispensing the specimen separated by the specimen separating area.

The separator further comprises a resin layer disposed on the substrate, the groove being defined in the resin layer.

The resin layer is made of a photo-setting resin.

The separator further comprises means for applying an external force to a component to be separated from the specimen.

In the separator, the specimen includes nucleic acids or proteins.

The separator according to the present invention separates the specimen on principles different from the prior art disclosed in U.S. patent No. 5,837,115 or the like. According to U.S. patent No. 5,837,115, substances of greater molecule sizes are more liable to be blocked by obstacles. Therefore, a substance having a larger size is discharged subsequently to a substance having a smaller size.

In the separator according to the present invention, a substance having a smaller size is trapped in the recesses in the specimen separating area and hence moves along a longer path. As a result, a substance having a smaller size is discharged subsequently to a substance having a larger size and hence is separated from the latter substance. Since a substance having a larger size passes relatively smoothly through the specimen separating area, the separator is less susceptible to clogging, and the throughput of the separator is relatively high. When separating large-size substances such as nucleic acids and proteins, these substances tend to clog the separator as the gyration radius of their molecules is in a very wide range. Once the separator is clogged by those substances, they cannot easily be removed by cleaning the separator. According to the present invention, the separator is free of such problems, and is suitably applicable to the separation of large-size substances such as nucleic acids and proteins.

In the separator, the specimen separating area comprises an area where a plurality of recesses is closely grouped. The plurality of recesses according to the present invention refers to as many recesses as required to perform a specimen separating function. The maximum diameter of the openings of the recesses may be set to a very small value. With such small maximum diameter, the separator is able to separate and analyze various substances which have not been expected to be separated and analyzed heretofore. For example, for separating nucleic acids and proteins, the recesses are desired to have small openings whose diameters are several hundred nanometers or less.

The openings of the recesses may be circular, elliptical, or polygonal in shape, and are not limited to any particular shapes. The maximum diameter of the openings of the recesses means the length of the longest straight line interconnecting any point in the opening and another point in the opening.

The depth of the recesses may not necessarily be in the direction which is in the same direction as gravity. For example, the recesses may extend horizontally in a wall of the flow passage.

Heretofore, it has been impossible to form recesses of such small opening diameters. However, the inventor of the present invention has found that the separator can be fabricated by forming the recesses according to electron beam photolithography using a Calixarene resist for producing microscopic patterns.

According to the present invention, the maximum diameter of the openings of the recesses determines the size of molecules to be trapped and the depth of the recesses determines the amount of trapped molecules and the period of time in which the molecules are trapped. The spaced intervals of the recesses affect the extent of broadening of the measured peak. Since these values can be individually set to desired values, the separator can separate a specimen with a wide size distribution with a high separating capability without causing a reduction in the throughput. For example, by designing the separator to increase a distribution of maximum diameters of the openings of the recesses, the separator can separate both molecules having large and small sizes with excellent separating efficiency.

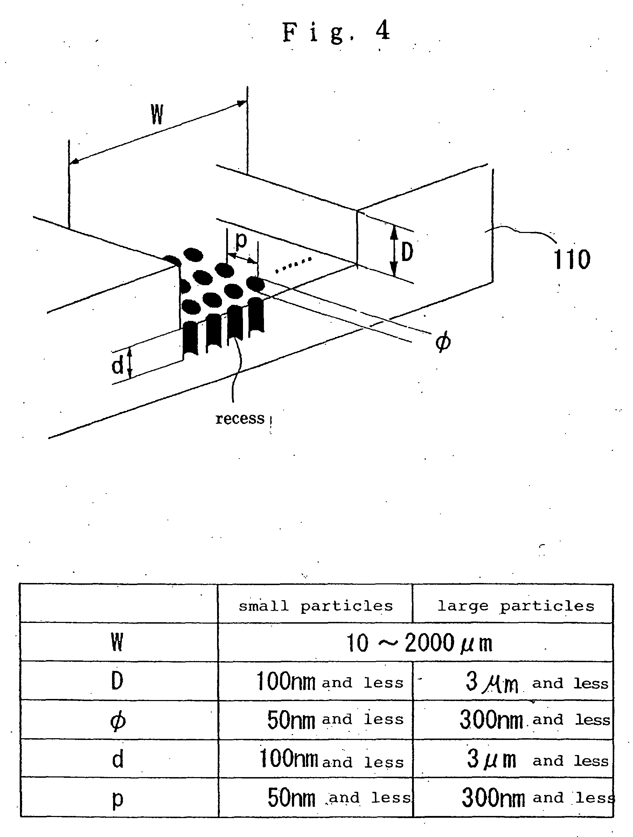

The maximum diameter of the openings of the recesses (e.g., φ in Fig. 4), the spaced intervals (e.g., p in Fig. 4) of the recesses, and the depth (e.g., d in Fig. 4) of the recesses may be selected in view of the central value M and the standard deviation σ of the sizes of a plurality of components contained in the specimen to be separated for optimizing the separating efficiency. For example, the maximum diameter of the openings of the recesses may be set to M, the spaced intervals of the recesses may be set to M, and the depth of the recesses may be set to M + 2σ. Alternatively, the maximum diameter of the openings of the recesses may be set to 2M, the spaced intervals of the recesses may be set to 2M, and the depth of the recesses may be set to 2M + 2σ.

In the separator, the recesses may be formed by anodic oxidization. According to anodic oxidization, it is possible to produce a separator having recesses of desired sizes which are spaced at desired intervals.

In the separator, the recesses are tapered and have openings whose maximum diameter is greater than the maximum diameter of the bottoms of the recesses. With this arrangement, molecules to be separated which have smaller sizes stay in the recesses for a longer period of time. Therefore, the separator has an increased separating capability.

In the separator, the inner wall of the flow passage is hydrophilic. Since molecules are prevented from sticking to the inner wall of the flow passage, the separator has an increased separating capability.

In the separator, the flow passage may be divided into a plurality of passageways by a partition, the partition having a plurality of recesses defined therein which communicate between the passageways. The recesses defined in the partition serve as specimen separating recesses for separating those molecules contained in the specimen which are smaller than a certain size. When the specimen is separated by the recesses, smaller molecules flow out of the flow passage more slowly. With this separator arrangement, molecules smaller than the specimen separating recesses can be dispensed as quickly as larger molecules from the separator.

In the separator, the partition may have a plurality of recesses defined in at least one of its surfaces.With this arrangement, it is possible for at least one of the passageways to provide a separating ability based on the recesses.

In the separator, the partition may have a plurality of recesses defined in both surfaces thereof, the recesses defined in one of the surfaces having openings whose maximum diameter is different from the maximum diameter of openings of the recesses defined in the other surface. The separator is thus capable of separating the specimen to fractionate molecules of different sizes separately through the passageways.

The separator may further comprise a projection disposed in the specimen separating area and having a plurality of recesses defined therein. The projection thus included provides an increased surface area where the recesses are defined for an increased separating capability.

The separator may further comprise voltage applying means for applying a voltage to the flow passage in a direction different to the direction in which the specimen travels in the flow passage. The voltage applying means is effective in bringing molecules to be separated into contact with the recesses more frequently for an increased separating capability.

The voltage should preferably be applied within 45 degrees from the direction of the depth of the recesses, and more preferably be applied within 30 degrees from the direction of the depth of the recesses, for bringing molecules to be separated into contact with the recesses much more frequently.

In the separator, the flow passage may comprise a plurality of flow passages, further comprising a specimen introducing flow passage extending across the flow passages. With this separator structure, when a specimen is introduced into one area of the separator, the separator can be introduced into the flow passages for a greatly increased analyzing efficiency. The separator may further comprise a plurality of pillars disposed between points of intersection between the flow passages and the specimen introducing flow passage, and the specimen separating area. Since the pillars can limit the size of molecules flowing into the flow passages, molecules of a desired size can be analyzed quickly and accurately.

The specimen that can be separated by the separator includes various substances. The separator according to the present invention is highly effective to separate nucleic acids and proteins. For separating these specimens, the separator is required to have a structure having small gaps of several hundred nanometers because small-size molecules need to be separated with a high separating capability. The separator is also required to effectively prevent itself from being clogged by large-size substances. The separator according to the present invention can meet both of the above requirements, and hence is suitable for use in separating nucleic acids and proteins.

According to the present invention, there is further provided a method of manufacturing a separator, comprising the steps of forming a flow passage for a specimen to pass therethrough, in a substrate, and forming a plurality of recesses in an inner wall of the flow passage by anodic oxidization. The anodic oxidization process makes it possible to manufacture a separator having recesses of desired size in a small number of steps without the need for a complex control process.

In the method, a voltage may be continuously lowered in the step of forming a plurality of recesses. The continuously lowered voltage can produce tapered recesses in the inner wall of the flow passage.

In the method, the step of forming a flow passage may comprise the steps of providing a resin layer on the substrate and forming a groove in the resin layer. For example, the resin layer may be made of a plastic resin, and a mold may be pressed against the resin layer to form the groove therein. With this method, it is easy to form the flow passage in the substrate. The separator can thus be manufactured with a good yield.

In the method, the resin layer may be made of a photo-setting resin for allowing the flow passage to be formed more easily.

According to the present invention, there is further provided a method of manufacturing a separator, comprising the steps of forming a groove to serve as a flow passage, in a surface of each of a pair of substrates, and joining the substrates and a plate member which has a plurality of recesses defined therein, to each other while the surfaces with the grooves defined therein are facing each other and the plate member is being interposed between the substrates. The method makes it possible to manufacture a separator having a plurality of flow passages.

In the above method, the plate member may further have a plurality of specimen separating recesses defined therein. According to this method, it is possible to manufacture a separator having a plurality of specimen separating recesses communicating between adjacent flow passageways.

### Brief Description of the Drawings

Fig. 1 is a view of a separator according to an embodiment of the present invention;
Fig. 2 is a cross-sectional view showing a liquid reservoir in the separator shown in Fig. 1;
Fig. 3 is a cross-sectional view taken along line A - A' of Fig. 2;
Fig. 4 is an enlarged fragmentary perspective view of a separating flow passage in the separator shown in Fig. 1;
Fig. 5 is a cross-sectional view of the separating flow passage;
Fig. 6 is a view illustrative of a process of separating a specimen;
Fig. 7a is a view showing a layout of recesses in a specimen separating region;
Fig. 7b is a view showing another layout of recesses in a specimen separating region;
Fig. 8a is a view showing another layout of recesses in a specimen separating region;
Fig. 8b is a view showing another layout of recesses in a specimen separating region;
Fig. 9a is a view showing still another layout of recesses in a specimen separating region;
Fig. 9b is a view showing still another layout of recesses in a specimen separating region;
Fig. 10 is a view showing yet another layout of recesses in a specimen separating region;
Figs. 11a through 11c are fragmentary cross-sectional views showing recesses of various shapes for use in the separator;
Fig. 12a is a cross-sectional view of a flow passage divided into two passageways;
Fig. 12b is a cross-sectional view taken along line B - B' of Fig. 12a;
Fig. 12c is a cross-sectional view of another flow passage divided into two passageways;
Figs. 13a and 13b are cross-sectional views of other flow passages;
Figs. 14a and 14b are plan and elevational views, respectively, illustrative of a process of introducing a buffer liquid into a chip;
Fig. 15 is a view illustrative of a process of applying a correcting voltage to adjust an electro-osmotic flow;
Fig. 16 is a view of a separator according to another embodiment of the present invention;
Fig. 17 is a view of a separator according to still another embodiment of the present invention;
Fig. 18 is a view of a separator according to yet another embodiment of the present invention;
Fig. 19 is an enlarged fragmentary view showing a pillar mesh employed in the separators shown in Figs. 17 and 18;
Figs. 20a and 20b are views illustrative of a function of the pillar mesh shown in Fig. 19;
Figs. 21a through 21j are cross-sectional views showing a process of manufacturing a separator according to the present invention;
Fig. 22 is a fragmentary perspective view of a porous alumina layer;
Figs. 23a and 23b are views showing an aluminum layer having peripheral edges covered with an insulating film or a conductive film;
Figs. 24a and 24b are views showing a device for carrying out an anodic oxidization process;
Fig. 25 is a diagram showing a scanning electron microscope photograph of the surface of a porous alumina layer;
Figs. 26a through 26d are views illustrative of a process of forming a flow passage;
Fig. 27 is a graph showing distributions of DNA migration speeds in the separator according to the present invention;
Fig. 28 is a view showing a process of manufacturing a separator according to an embodiment of the present invention;
Figs. 29a through 29g are views showing a process of manufacturing a separator according to another embodiment of the present invention;
Figs. 30a through 30c are views showing a separator according to still another embodiment of the present invention and a process of manufacturing such a separator; and
Fig. 31 is a graph having a vertical axis representative of the intensity of the signal from the photomultiplexer and a horizontal axis representative of the time from the start of the introduction of the specimen.

### Best Mode for Carrying Out the Invention

According to the present invention, a flow passage and a specimen separating area are formed on the surface of a silicon substrate, a glass substrate of quartz or the like, or a resin substrate of silicon resin, polystyrene, polyethylene terephthalate, or the like. For example, grooves may be formed in the surface of one of the above substrates and sealed by a surface member, thus defining a flow passage or a specimen separating area in the space enclosed by the substrate and the surface member.

Recesses according to the present invention are formed by etching the substrate in a given pattern according to a lithographic process such as photolithography or electron beam photolithography. Alternatively, recesses can be formed by a process which transfers a recess pattern from a mold to the surface of a plastic resin or by an anodic oxidization process.

The recesses are preferably shaped as circular cylinders, elliptic cylinders, circular cones, or elliptic cones, but may be shaped as rectangular parallelepipeds, triangular pyramids, or otherwise. The recesses may have various sizes which are selected depending on the substance to be separated. Examples of the sizes of the recesses are given as follows:
(i) If the separator is to separate and concentrate cells and other components, then the size of the recesses ranges from 1 µm to 10 µm.
(ii) If the separator is to separate and concentrate solids (fragments of cell membranes, mitochondria, endoplasmic reticula) and liquid fractions (cytoplasm), of components obtained by breaking cells, then the size of the recesses ranges from 100 nm to 1 µm.
(iii) If the separator is to separate and concentrate high-molecular components (DNA, RNA, proteins, sugar chains) and low-molecular components (steroids , grape sugar etc.), of the components of liquid fractions, then the size of the recesses ranges from 1 nm to 100 nm.

While the recesses may have various depths depending on the substance to be separated, they may have a depth ranging from 5 to 2000 nm.

The average interval or distance between adjacent ones of the recesses should preferably be 200 nm or less, more preferably 100 nm or less, or much more preferably 70 nm. Though no lower limit is present for the average interval or distance between adjacent recesses, it may be of 5 nm or greater. The average interval or distance between adjacent recesses refers to the distance between the centers of the recesses.

Embodiments of the present invention will be described below with reference to the drawings.

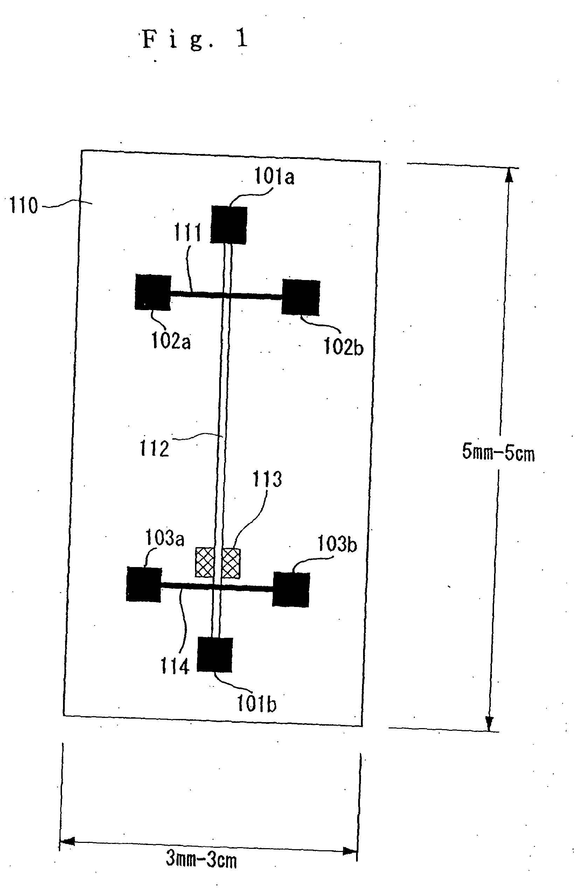

Fig. 1 shows a separator according to an embodiment of the present invention. As shown in Fig. 1, separating flow passage 112 is defined in substrate 110, and charging flow passage 111 and retrieving flow passage 114 are defined in substrate 110 across separating flow passage 112. Liquid reservoirs 101a, 101b, liquid reservoirs 102a, 102b, and liquid reservoirs 103a, 103b are disposed respectively at the opposite ends of charging flow passage 111, separating flow passage 112, and retrieving flow passage 114. Detector 113 is positioned on separating flow passage 112. The separator has outer dimensions selected depending on the substance to be separated. Usually, however, the separator has a length ranging from 5 mm to 5 cm and a width ranging from 3 mm to 3 cm.

A process of separating a specimen with the separator shown in Fig. 1 will be described below. A specimen is first introduced into liquid reservoirs 102a, 102b. The specimen then flows through charging flow passage 111 and is then charged into separating flow passage 112 from the point of intersection between charging flow passage 111 and separating flow passage 112. A voltage is applied across separating flow passage 112 by electrodes (not shown) disposed respectively in liquid reservoirs 101a, 101b. The voltage applied across separating flow passage 112 develops an electric field which forces the specimen to move from charging flow passage 111 toward retrieving flow passage 114. A number of recesses are defined at constant intervals in separating flow passage 112. When the specimen moves over these recesses, the specimen is separated due to the size of its molecules. If specimens having various molecule sizes are introduced into the separating flow passage 112, the specimens are stored in the liquid reservoirs 103a, 103b at different times because of their different sizes and hence separated.

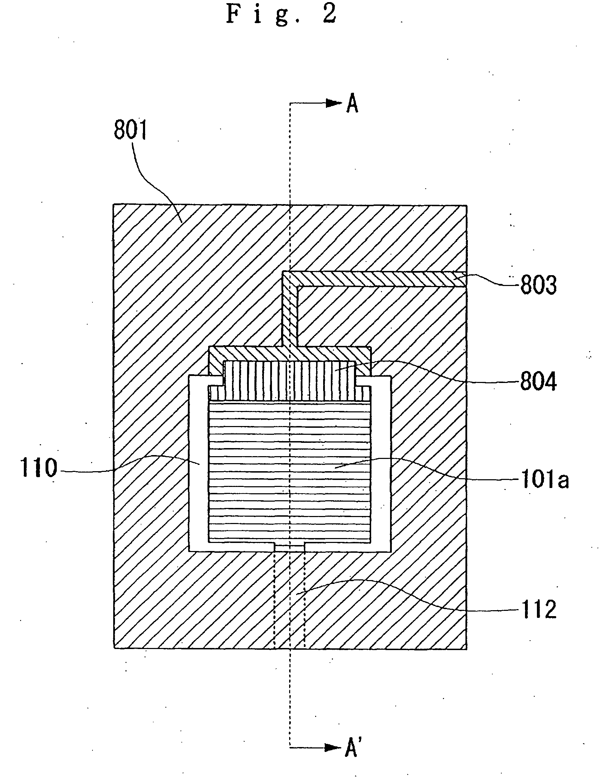

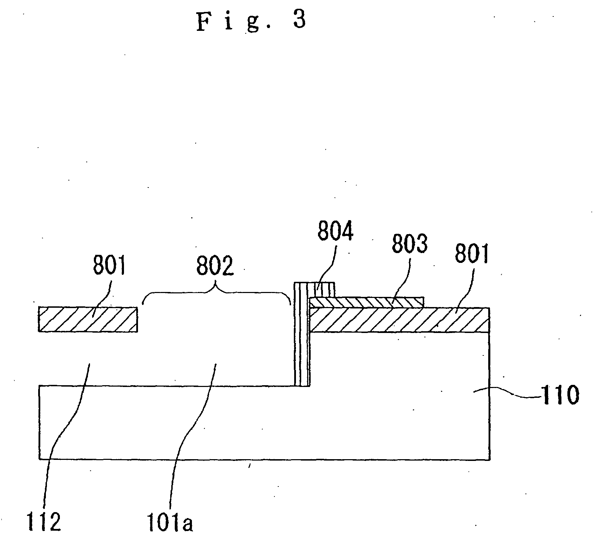

The structure of the liquid reservoirs where the electrodes are disposed will be described below with reference to Figs. 2 and 3. Fig. 2 shows at an enlarged scale liquid reservoir 101a illustrated in Fig. 1, and Fig. 3 is a cross-sectional view taken along line A - A' of Fig. 2. As shown in Fig. 2, a covering layer 801 having an opening 802 for introducing a buffer liquid therethrough is disposed on the substrate 110 in which the separating flow passage 112 and the liquid reservoir 101a are defined. A conductive path 803 which can be connected to an external power supply is disposed on the covering layer 801. As shown in Fig. 3, an electrode plate 804 is disposed on and extends along a wall surface of the liquid reservoir 101a and the conductive path 803. The electrode plate 804 and the conductive path 803 are pressed together and are electrically connected to each other. The other liquid reservoirs are of a structure similar to the above structure.

In Fig. 1, the separating flow passage 112 and the charging flow passage 111 are shown as extending across each other at a right angle. However, the separating flow passage 112 and the charging flow passage 111 may cross each other at an angle of 45 degrees. The retrieving flow passage 114 may also cross the separating flow passage 112 at an angle of 45 degrees.

The liquid reservoirs 102a, 102b and the charging flow passage 111 may be dispensed with. In such a modification, a buffer liquid is introduced from the liquid reservoir 101a and fills up the separating flow passage 112, after which a specimen is introduced from the liquid reservoir 101a. Similarly, the liquid reservoirs 103a, 103b and the retrieving flow passage 114 may be dispensed with. In such a modification, the separated specimen may be dispensed from the liquid reservoir 101b.

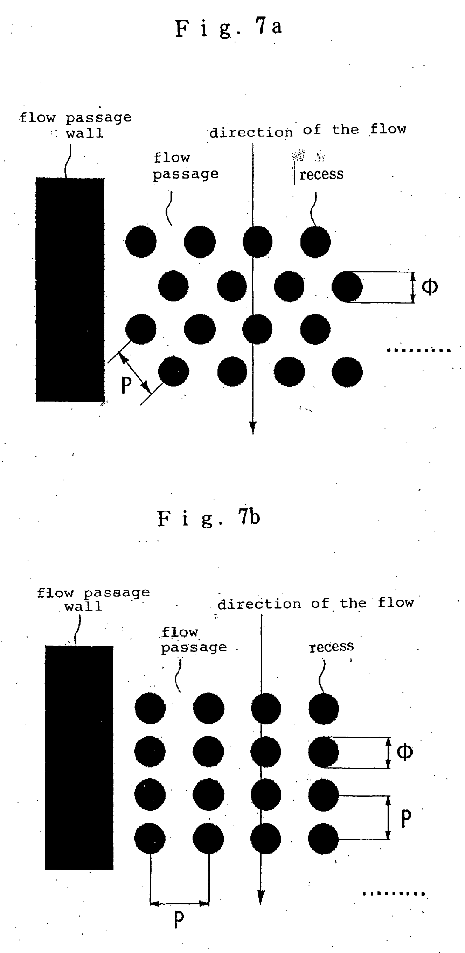

Fig. 4 shows in detail the structure of the separating flow passage 112 shown in Fig. 1. As shown in Fig. 4, a groove having a width W and a depth D is defined in the substrate 110, and recesses shaped as circular cylinders having a diameter φ and a depth d are defined at equal intervals p in the bottom of the groove. The width W, the depth D, the diameter φ, and the depth d may be of illustrated sizes. In structures shown in Figs. 7, 8, 9, and 10, the width W, the depth D, the diameter φ, and the depth d may be of similar sizes.

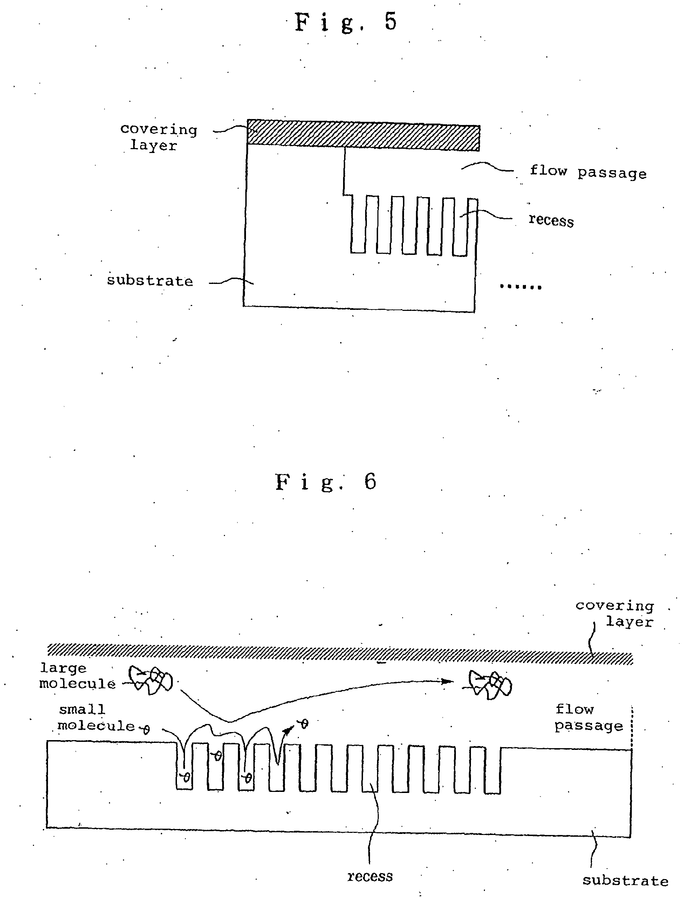

The flow passage is actually covered with a covering layer as shown in Fig. 5. Specifically, the flow passage defined in the substrate is sealed by the covering layer, providing a space in which the specimen moves. The covering layer serves to prevent water contained in the specimen from being evaporated. According to an embodiment to be described later on, since an electrode needs to be positioned above the flow passage, a covering layer having a transparent electrode is required as an indispensable component of the separator.

The reason why the structure with the recesses functions as a specimen separating means will be described below with reference to Fig. 6. In Fig. 6, a specimen separating area has a number of recesses defined at given intervals along a flow passage in a substrate. When a specimen moves through the specimen separating area, molecules having sizes greater than the diameter of the recesses are not trapped by the recesses, but move through the flow passage. Therefore, those molecules pass through the specimen separating area in a short period of time. However, molecules having sizes smaller than the diameter of the recesses are trapped in the recesses and hence move along a longer path. As a result, the specimen is separated such that a substance thereof having a smaller size is discharged subsequently to a substance thereof having a larger size.

Since a substance having a larger size which tends to clog the separator passes relatively smoothly through the specimen separating area, the separator is less susceptible to clogging, and the throughput of the separator is relatively high.

The structure of the specimen separating area which carries out the separating process shown in Fig. 6 will be described below with reference to Fig. 7a. As shown in Fig. 7a, the specimen separating area has a number of recesses having openings of maximum diameter φ which are defined at regular intervals p.

Fig. 7b shows another specimen separating area. In Fig. 7b, the specimen separating area has a number of recesses arrayed in rows along the flow of the specimen in the flow passage.

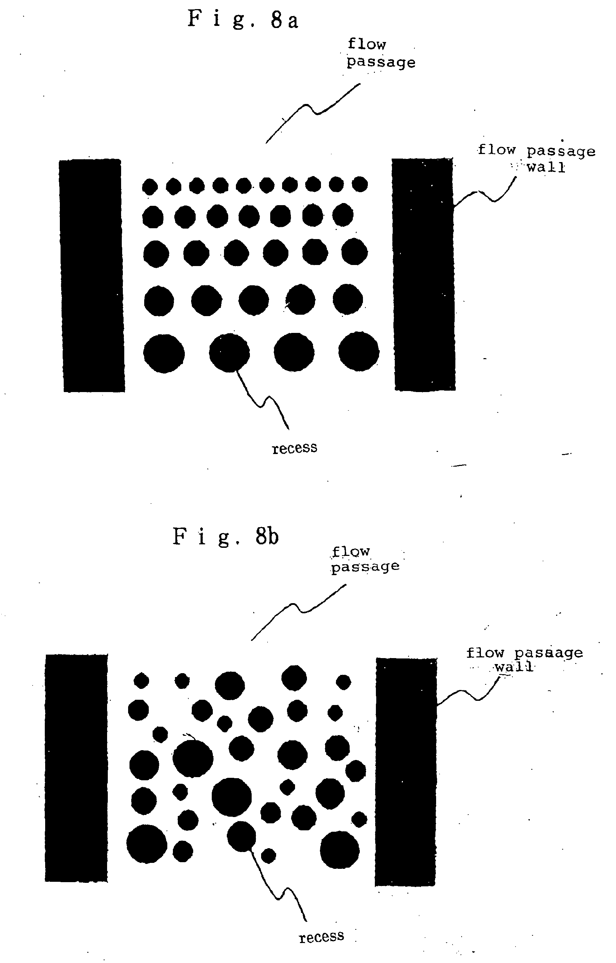

Fig. 8a shows another specimen separating area. In an example shown in Fig. 8a, recesses are arranged in arrays such that the number of openings thereof is progressively reduced or increased along the flow passage.

Fig. 8b shows another specimen separating area. In the example shown in Fig. 8b, recesses having differently sized openings are arranged randomly.

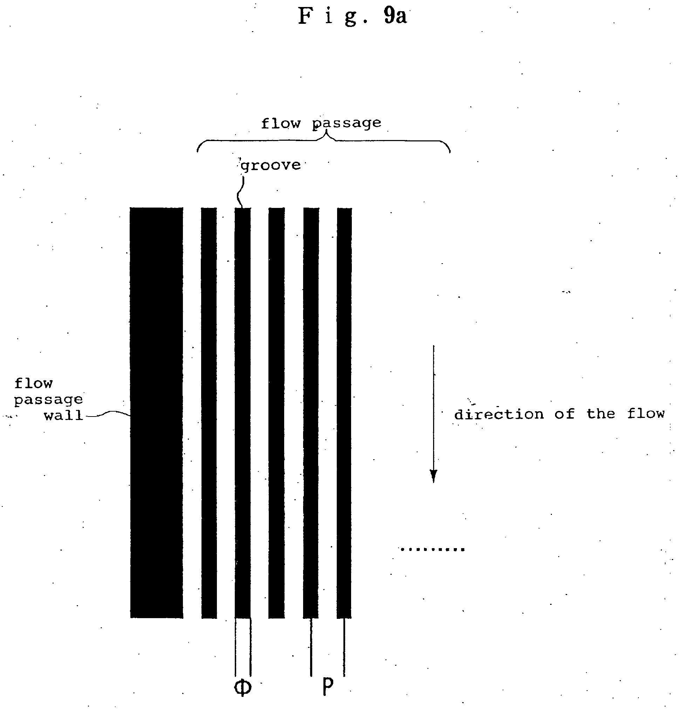

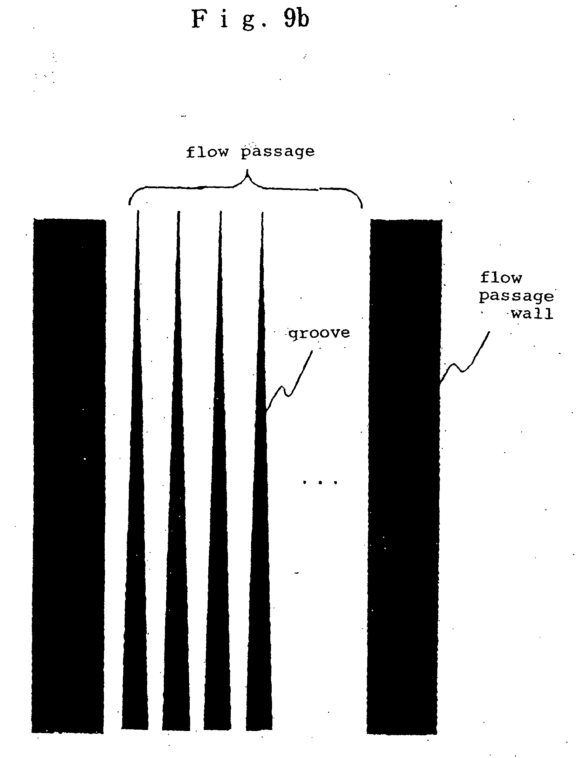

Fig. 9a shows still another specimen separating area. In Fig. 9a, the specimen separating area has a number of stripe-shaped recesses extending along the flow of the specimen in the flow passage. Stated otherwise, the recesses are defined not as holes, but as grooves. The grooves have a width φ and are spaced at intervals p.

Fig. 9b shows another specimen separating area. In : the example shown in Fig. 9b, recesses are in the form of grooves which are progressively wider downstream along the flow passage.

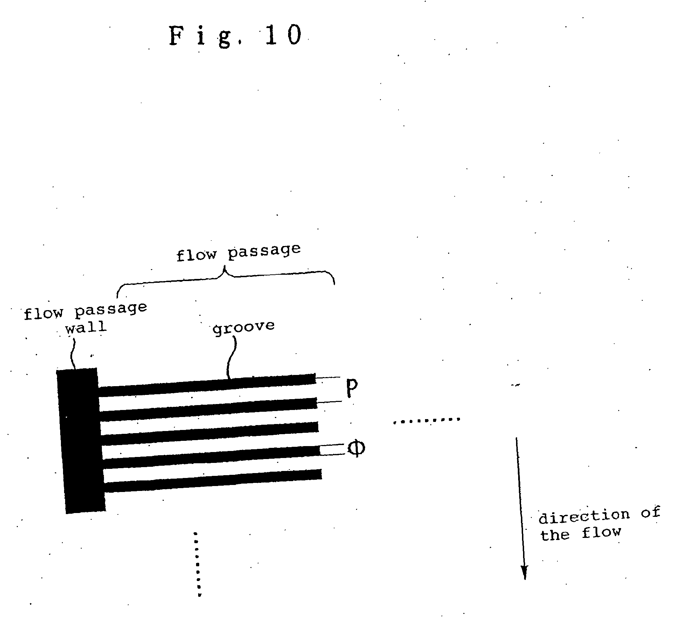

Fig. 10 shows yet another specimen separating area. In Fig. 10, the specimen separating area has a number of stripe-shaped recesses or grooves extending perpendicularly to the flow of the specimen in the flow passage. The grooves have a width φ and are spaced at intervals p.

The specimen separating areas which are constructed as shown in Figs. 8a, 8b, and 9b offer the following advantages:

Molecules which are larger in size than the recesses and grooves cannot effectively be separated by those recesses and grooves. Therefore, if recesses and grooves for separating molecules have a certain fixed size, then their molecule separating capability for those molecules which are larger in size than the recesses and grooves is smaller than for those molecules which are smaller in size than the recesses and grooves. With the recesses and grooves for separating molecules being of a certain fixed size, furthermore, the range of molecule sizes that can effectively be separated by those recesses and grooves is narrow. The flow passages having the structures shown in Figs. 8a, 8b, and 9b make it possible to increase the molecule separating capability for molecules of larger sizes and also to increase the range of molecule sizes that can effectively be separated.

According to the present invention, the maximum diameter of the openings of the recesses is selected depending on the size of components to be separated (nucleic acid fragments, organic molecules such as amino acids, peptides, and proteins, and molecules and ions such as chelated metal ions). For example, the maximum diameter of the openings of the recesses should preferably be the same as, or slightly smaller or larger than, the gyration radius corresponding to the central value of sizes of the molecules to be separated. Specifically, the difference between the gyration radius corresponding to the central value and the maximum diameter of the openings of the recesses is selected to be 100 nm or less, more preferably 10 nm or less, or most preferably 1 nm or less. If the maximum diameter of the openings of the recesses is set to an appropriate value, the separator has a better separating capability.

In the above embodiments, the recesses are disposed at constant intervals. However, the recesses may be disposed at different intervals in the specimen separating area for efficiently separating molecules and ions having different sizes including large, medium, and small sizes. As shown in Fig. 7a, it is effective to position the recesses in rows staggered with respect to the flow of the specimen. The recesses positioned in the staggered rows are liable to encounter molecules of the specimen in a greater likelihood for efficiently separating a desired component from the specimen while preventing the separator from being clogged.

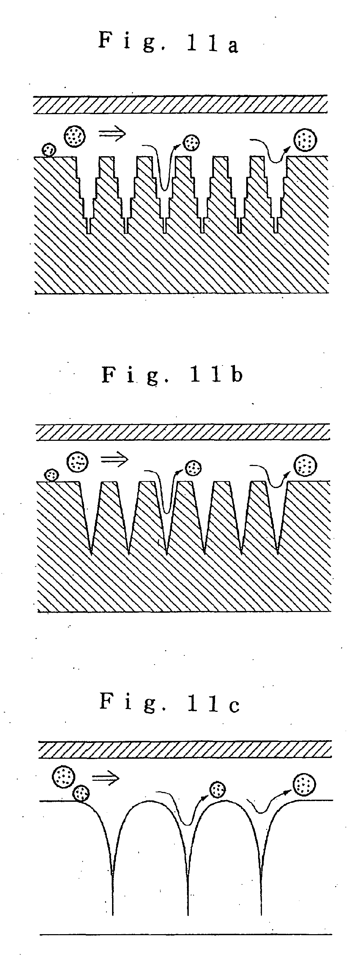

In the above embodiments, the recesses are shaped as circular cylinders. However, the recesses may be of a tapered shape whose inside diameter is progressively reduced toward the bottom. For example, as shown in Fig. 11a, the inside diameter of recesses may be reduced stepwise toward the bottom, or as shown in Figs. 11b and 11c, the inside diameter of recesses may be reduced continuously toward the bottom. In these arrangements, since smaller molecules can move more deeply into the recesses, they stay in the recesses for a longer time, so that the separator has a higher separating capability.

The tapered recesses can be produced by various methods. For example, when recesses are defined by the anodic oxidization process, the recesses are tapered by gradually lowering the applied voltage.

The tapered recesses may be formed by etching. For example, if a silicon substrate is used, then vertical recesses having the same inside diameter as the inside diameter of the bottom of the recesses to be formed are formed in the silicon substrate by dry etching. Then, the vertical recesses are subjected to wet etching using an isotropic etching liquid. At this time, the exchange rate of the etching liquid in the vertical recesses is minimum at the bottom of the vertical recesses and is progressively greater from the bottom toward the opening of the vertical recesses. Therefore, almost no side etching occurs in the vicinity of the bottom of the vertical recesses, and almost no increase is caused in the inside diameter in the vicinity of the bottom of the vertical recesses. On the other hand, the extent of side etching and hence the inside diameter of the vertical recesses become progressively greater from the bottom toward the opening of the vertical recesses. In this manner, the tapered recesses are produced.

In the above embodiments, the recesses are positioned in a planar layout. However, the recesses may be positioned in a three-dimensional layout. For example the flow passage may be divided into two passageways by a separating plate, and the recesses may be formed in the separating plate and flow passage walls.

The separator according to the present invention is based on the property that smaller molecules flow out of the flow passage more slowly. In order to dispense smaller molecules as quickly as larger molecules from the separator, the separating plate referred to above may have through recesses defined therein which have a diameter that is about the same as the size of the smaller molecules. The smaller molecules are therefore trapped in and flow through the through recesses in bypassing relation to the flow passage where the recesses are defined. Consequently, the smaller molecules are dispensed from the separator as quickly as the larger molecules, and other molecules can also be separated by the separator.

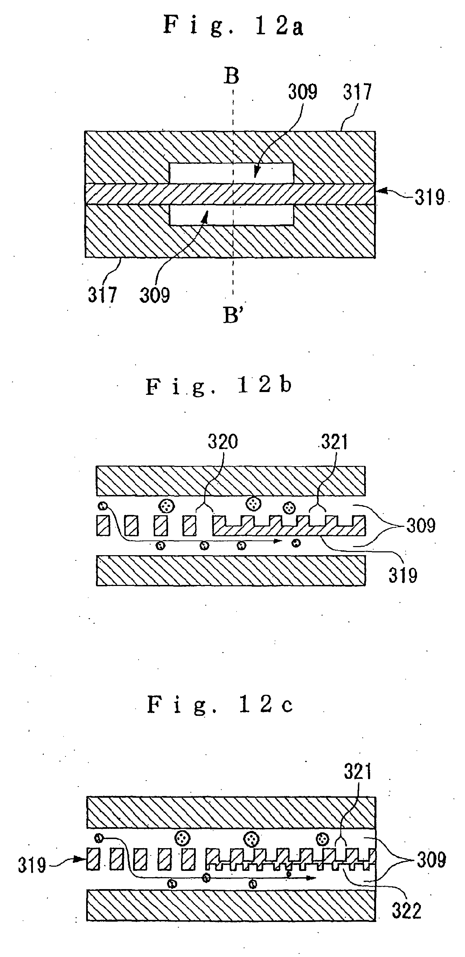

Figs. 12a and 12b show different flow passages divided into two passageways. Fig. 12a is a vertical cross sectional view of the flow passage taken along a plane perpendicular to the flow of the specimen. In Fig. 12a, flow passage 309 is divided into two passageways by separating plate 319. Fig. 12b is a cross-sectional view taken along line B - B' of Fig. 12a. Separating plate 319 has a number of recesses 321 defined in an upper surface thereof and a number of through recesses 320 defined in a portion thereof. Molecules that can pass through through recesses 320 move into lower passageway 309 via through hole 320. Molecules that can not pass through through recesses 320 move in upper passageway 309, and tend to be trapped in recesses 321. The flow passage structure shown in Figs. 12a and 12b is capable of dispensing smaller molecules quickly which would flow more slowly in a flow passage structure having a single flow passage.

Fig. 12c shows another flow passage divided into two passageways. In Fig. 12c, separating plate 319 has, in addition to through recesses 320, a number of recesses 322 defined in a lower surface thereof which are smaller than recesses 321 defined in the upper surface thereof. With the flow passage structure shown in Fig. 12c, lower flow passage 309 is capable of separating smaller molecules highly accurately.

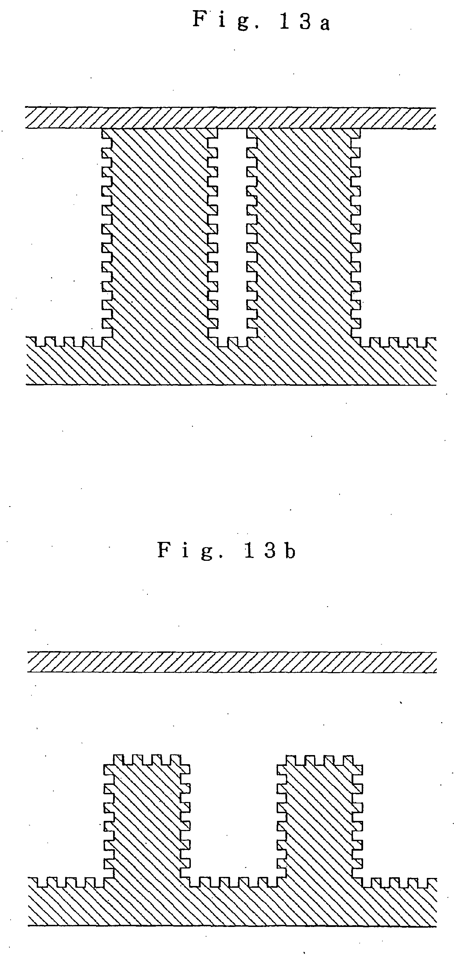

Figs. 13a and 13b show other flow passages. As shown in Figs. 13a and 13b, pillars or projections are disposed in the flow passage, and recesses are defined in the pillars or projections. The specimen separating area with the recesses has an increased surface area for an increased separating capability.

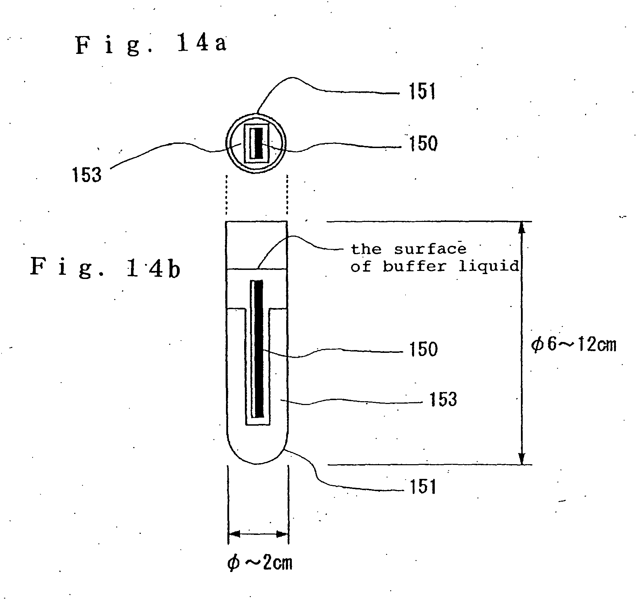

The separator according to the present invention should preferably be used with a buffer liquid introduced therein. If the flow passage walls and the covering layer are made of a hydrophobic material such as plastics, it usually is not easy to introduce the buffer liquid into the flow passage. One way of introducing the buffer liquid into the flow passage is shown in Figs. 14a and 14b. In Figs. 14a and 14b, chip 150 is fixedly disposed in holder 153 of centrifugal tube 151 which contains a buffer liquid, and the buffer liquid is introduced into chip 150 when centrifugal tube 151 is operated for centrifugal separation. It is also effective to form a hydrophilic film such as a silicon oxide film or the like on the surface of the flow passage in the separator for eliminating the difficulty in introducing the buffer liquid into the flow passage.

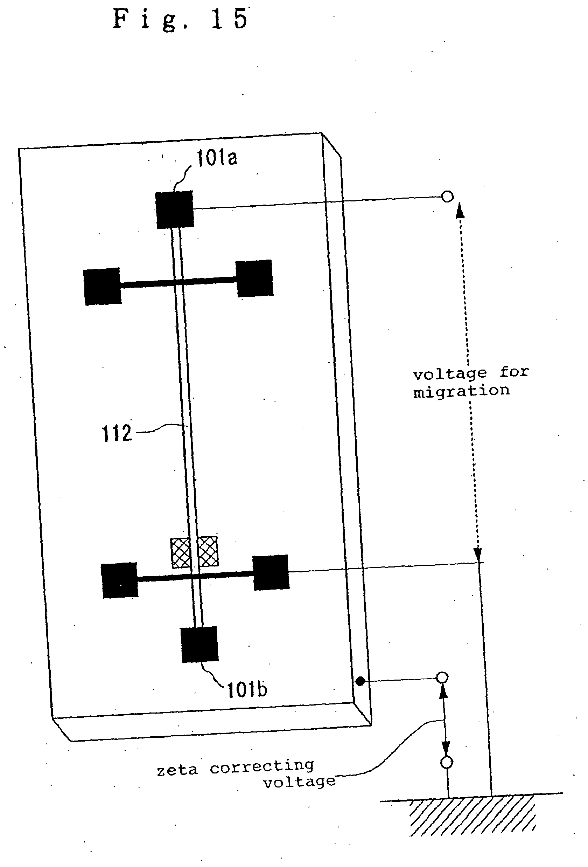

As shown in Fig. 15, a voltage is applied across separating flow passage 112 to force the specimen to move through separating flow passage 112. A voltage for suppressing an electro-osmotic flow may be applied in addition to the voltage for forcing the specimen to move through separating flow passage 112. In Fig. 15, a zeta correcting voltage is applied to the substrate to suppress an electro-osmotic flow to effectively prevent measured peaks from broadening.

According to the present invention, the means for forcing the specimen to move through the flow passage is not limited to a voltage. When a buffer liquid itself is not introduced into the flow passage, but a buffer liquid containing a specimen to be separated is introduced into the flow passage, the buffer liquid automatically flows into the flow passage due to a capillary action. As the buffer liquid automatically flows into the flow passage, the specimen can be separated.

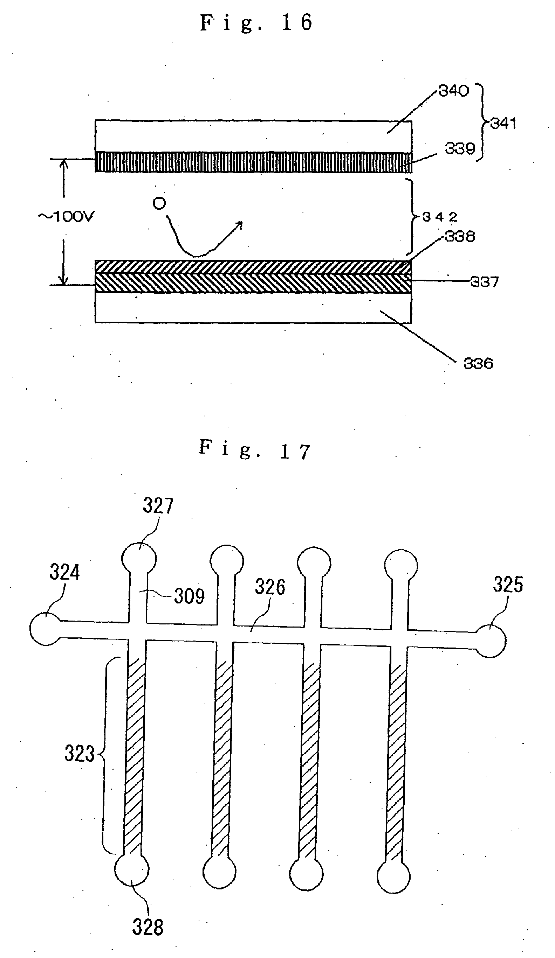

If the specimen is not only to be separated but also to be dispensed from the separator, the depth of the flow passage is increased because a relatively large amount of specimen needs to be introduced into the flow passage. When a relatively large amount of specimen is introduced into the flow passage, the specimen may not be separated sufficiently as molecules to be separated from the specimen are brought into contact with the recesses less frequently. In this case, it is preferable to apply a voltage between upper and lower surfaces of the flow passage to positively guide the molecules into the recesses. Fig. 16 shows a separator according to an embodiment of the present invention in which such a voltage is applied between upper and lower surfaces of the flow passage. As shown in Fig. 16, gold electrode 337 is disposed on glass substrate 336, and porous alumina layer 338 is disposed on gold electrode 337 beneath flow passage 342. Covering layer 341 disposed above flow passage 342 comprises cover glass plate 340 and transparent electrode 39 mounted on the lower surface of cover glass plate 340. When a voltage is applied between gold electrode 337 as positive electrode and transparent electrode 339 as negative electrode, molecules to be separated move through the flow passage under forces directed from transparent electrode 339 toward gold electrode 337, and are brought into contact with the recesses more frequently. Therefore, the separator has an increased separating capability. While the DC voltage is shown as being applied, both DC and AC voltages are applicable to the separator.

If a DC voltage is employed, then the electrode associated with the recesses is used as the positive electrode because biological substances such as DNA and proteins are negatively charged. If an excessive voltage is applied to develop an electric field, which is too strong, then since molecules to be separated cannot easily move out of the recesses, the molecules flow out extremely slowly. The electric field developed by the voltage should preferably have an intensity of 50 V/cm or less.

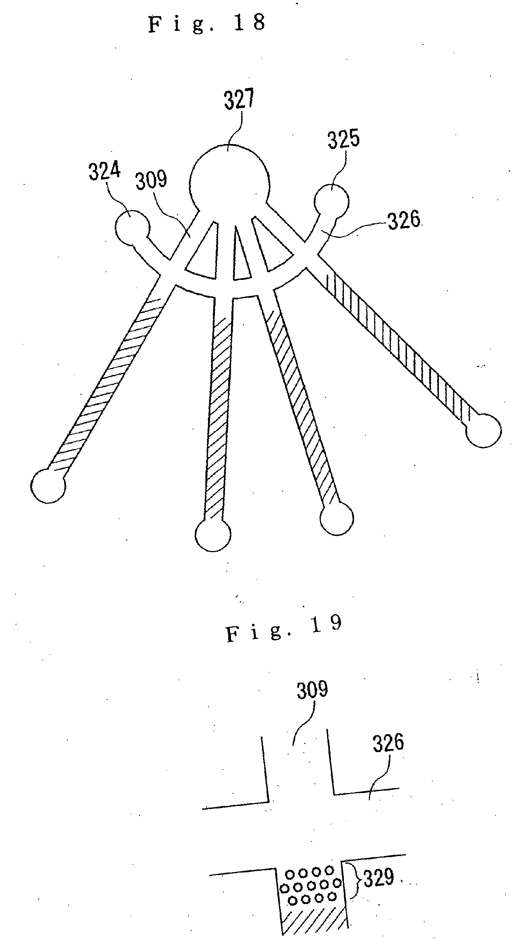

A separator may have a plurality of flow passages with specimen separating areas, and a specimen introducing flow passage extending across the flow passages for introducing a specimen into the specimen separating areas. Fig. 17 shows such a separator. As shown in Fig. 17, the separator has a plurality of flow passages 309 having specimen separating areas 323 each with a number of recesses. A specimen to be separated is introduced from specimen inlet 324 and diffused toward reservoir 325. Flow passage 326 extending between specimen inlet 324 and reservoir 325 has no separating capability, but serves to carry the specimen into flow passages 309 each having a separating capability. After the specimen is filled in flow passages 326, the specimen migrates in a direction from reservoirs 327 toward reservoirs 328, and is simultaneously separated and analyzed. The specimen can thus be analyzed highly efficiently. If specimen separating areas 323 of respective flow passages 309 have different characteristics, then the specimen can simultaneously be analyzed differently. Fig. 18 shows another separator having a plurality of flow passages with respective specimen separating areas. The separator shown in Fig. 18 has single reservoir 327 for introducing a buffer liquid therefrom into all flow passages 309 efficiently.

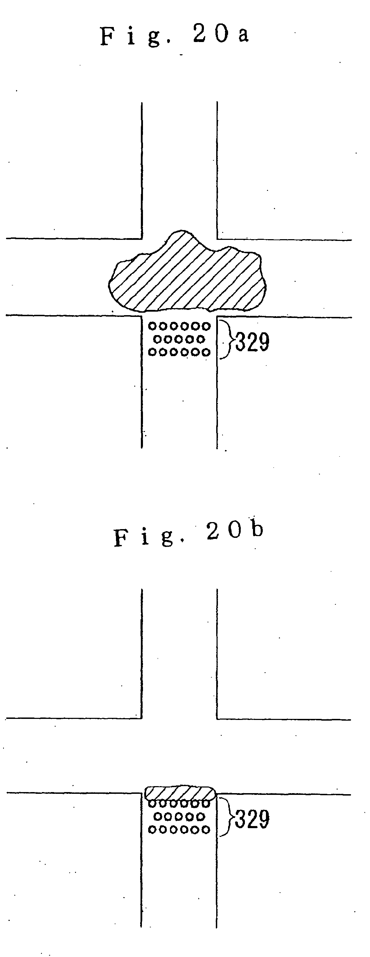

In the separators shown in Figs. 17 and 18, a pillar mesh may be disposed in regions where the flow passages with the specimen separating areas and the specimen introducing flow passage cross each other. Fig. 19 shows such a pillar mesh. In Fig. 19, pillar mesh 329 comprises a plurality of minute pillars disposed at the point of intersection between flow passage 309 and flow passage 326. Pillar mesh 329 has a filtering function to pass only those molecules whose sizes fall in a desired range into separating area 323 by controlling the pitch of the pillars of pillar mesh 329, so that the molecules can be analyzed as desired quickly and accurately. In Fig. 19, the flow passages with the specimen separating areas and the specimen introducing flow passage cross each other perpendicularly. However, the flow passages with the specimen separating areas and the specimen introducing flow passage may cross each other at any desired angle.

When a weak drive force, e.g., a weak electric field, is applied to a group of molecules to be separated, the specimen which has been spread as shown in Fig. 20a before it starts to migrate is blocked by pillar mesh 329. Therefore, as shown in Fig. 20b, the molecules are concentrated into a narrow band. Then, a temporarily strong drive force, e.g., a strong electric field, is applied to the molecules, forcing the concentrated molecules to pass between the pillars. This is because even if molecules, like high-molecular components such as DNA and protein, have a size greater than the distance between adjacent pillars, the molecules are expanded and pass between the pillars if the pillars are arranged in one to several rows (reputation effect). After having passed through pillar mesh 329, the molecules remain to be shaped as the narrow band, and any overlapping peaks of the molecules thus separated are reduced, so that the molecules can be separated highly accurately. Furthermore, since a sufficiently narrow band as shown in Fig. 20b is obtained even when the specimen is directly charged into the reservoirs of the separating flow passages, no charging flow passage is required.

In Figs. 19, 20a, and 20b, the flow passage with the specimen separating area and the specimen introducing flow passage cross each other perpendicularly. However, the flow passage with the specimen separating area and the specimen introducing flow passage may cross each other at any desired angle.

### Process of forming recesses by etching:

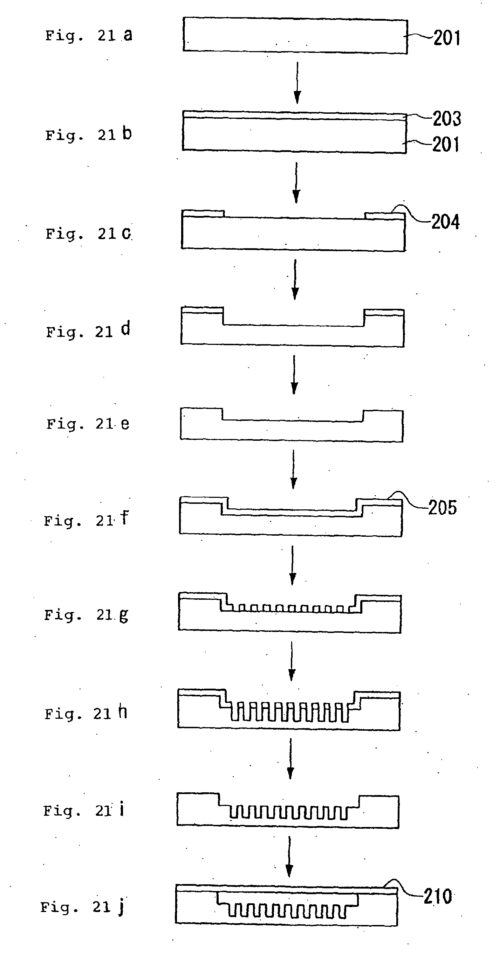

A process of forming recesses by etching will be described below in detail with reference to Figs. 21a through 21j.

As shown in Fig. 21a, silicon substrate 201 is prepared. Then, silicon substrate 201 is coated with Calixarene electron beam negative resist 203 as shown in Fig. 21b. An electron beam (EB) is applied to a portion, in which a specimen flow passage will be formed, of the coating of Calix arene electron beam negative resist 203. The exposed portion of the coating of the Calixarene electron beam negative resist 203 is then developed, i.e., removed, by xylene, and the silicon substrate 201 is rinsed with isopropyl alcohol. As a result, patterned resist 204 is obtained as shown in Fig. 21c.

Using patterned resist 204, silicon substrate 201 is etched as shown in Fig. 21d. After the resist is removed as shown in Fig. 21e, the entire surface of silicon substrate 201 is coated with positive photoresist 205 as shown in Fig. 21f. Thereafter, the flow passage portion is exposed to an electron beam through a mask in a pattern of recesses, and then developed as shown in Fig. 21g. Now, positive photoresist 205 is patterned with recesses (recesses) on silicon substrate 201.

Then, silicon substrate 201 is etched by way of RIE using a mixed gas of CF₄ and CHF₃ as shown in Fig. 21h. Positive photoresist 205 is then removed by an organic cleaning process using a mixture of acetone, alcohol, and water as shown in Fig. 21i. Then, silicon substrate 201 is sealed by glass plate 210 which is electrostatically joined, thus completing a separator, as shown in Fig. 21j.

A separator was fabricated according to the process described above, and checked for appearance. It was confirmed that the separator had no problem with respect to its appearance.

### Process of forming recesses by anodic oxidization:

A process of forming recesses by anodic oxidization will be described below in detail.

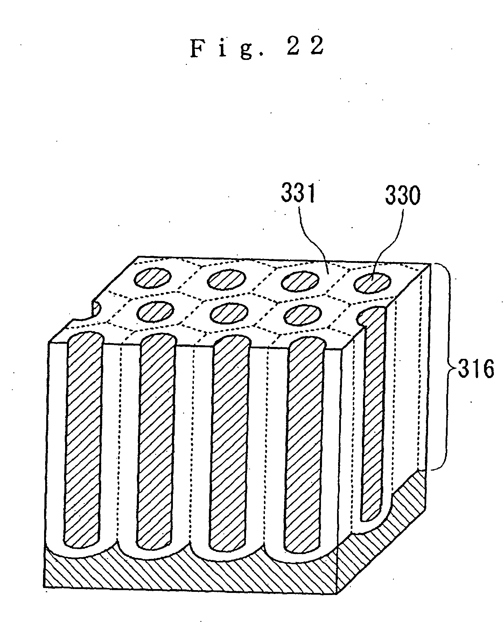

Anodic oxidization is a process in which a metal such as aluminum, titanium, zirconium, niobium, hafnium, or tantalum to be oxidized is used as anode in an electrolytic solution, and a current is supplied to the metal to oxidize the metal. According to this process, an acid electrolytic solution is used, and when water is electrolyzed by the current, hydrogen is generated at the cathode, but no oxygen is generated at the anode, but an oxide coating layer is deposited on the surface of the metal. If the metal is aluminum, then the oxide coating layer is referred to as a porous alumina layer. As shown in Fig. 22, porous alumina layer 316 has a periodic structure with thin recesses 330 defined centrally in respective cells 331. Since the periodic structure is self-organized, it can easily be formed as a nanometer structure without the need for any patterning. The cells are spaced at intervals proportional to the oxidization voltage (2.5 nm/V), and if the metal is aluminum, then sulfuric acid is used as the acid electrolytic solution for an oxidization voltage up to 30 V, oxalic acid is used as the acid electrolytic solution for an oxidization voltage up to 50 V, and phosphoric acid is used as the acid electrolytic solution for an oxidization voltage up to 200 V.

The size of the thin recesses depends upon the oxidizing conditions and the surface treatment after oxidization. The diameter of the thin recesses increases as the oxidization voltage rises. For example, when the oxidization voltage is 5 V, 25 V, 80 V, and 120 V, then thin recesses with a circular or elliptic opening which have a maximum diameter of about 10 nm, 20 nm, 100 nm, and 150 nm, respectively, are formed. After the porous alumina layer is formed, the surface thereof is etched with a solution containing 3 wt % of phosphoric acid, for example, for surface treatment. As the period of such surface treatment is longer, the diameter of the thin recesses is greater.

By selecting an oxidization voltage and a period of surface treatment, it is possible to produce recesses arrayed regularly, spaced at desired intervals, and having desired diameters.

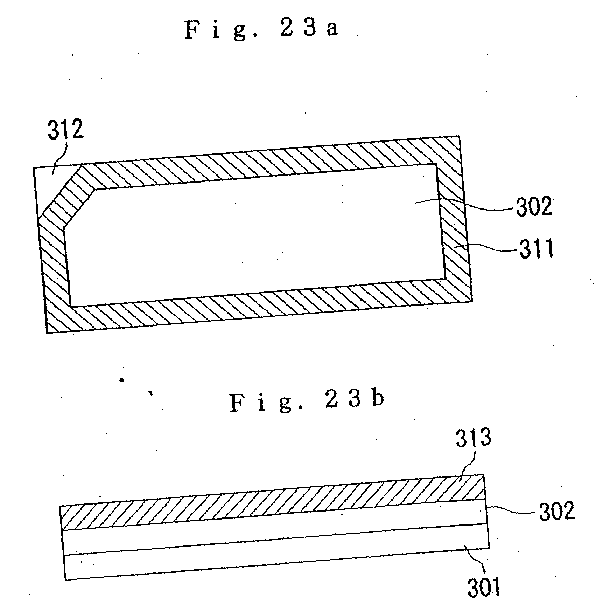

For providing a more uniform porous alumina layer, as shown in Figs. 23a and 23b, it is preferable to cover the peripheral edges of an aluminum layer to be subjected to anodic oxidization with an insulating film and then process the aluminum layer according to anodic oxidization. Fig. 23a shows in plan aluminum layer 302 disposed on an insulating substrate and having peripheral edges coated with insulating film 311. Insulating film 311 may be made of an insulating resin such as a photosensitive polyimide. Insulating film 311 thus provided is effective to suppress the phenomenon that an anodic oxidization reaction is accelerated only in a region around an electrode attachment area 312 to produce a non-oxidized region remote from the anode. Therefore, a porous alumina layer can be formed uniformly on the entire surface of aluminum layer 302.

A porous alumina layer can be produced in a desired location by forming a dent with a mold in a region where a porous alumina layer is to be positioned and then performing anodic oxidization, according to a process proposed by Asoh (J. Vac. Sci. Technol. B 19(2), 569 (2001)). In this case, the maximum diameter of the recesses can be set to a desired value by controlling the applied voltage.

As shown in Fig. 23b, a conductor (gold or the like) which is not subject to anodic oxidization may be evaporated on aluminum layer 302 on slide glass plate 301 to form conductor layer 313, and thereafter the assembly is processed for anodic oxidization, thus uniformly providing a porous alumina layer on the entire surface of aluminum layer 302. After the anodic oxidization, if the conductor of conductor layer 313 is gold, then it is removed by a gold etchant. The etchant may be prepared by mixing potassium iodide and an aqueous solution of iodine at a ratio of potassium iodide : iodine : water = 1 : 1 : 3 (weight ratio).

To prevent molecules of DNA and protein from sticking to the flow passage walls, it is preferable to perform a hydrophilic treatment on the flow passage walls, such as applying a coating to the flow passage walls. As a result, the separator has a good separating capability. The coating applied to the flow passage walls may be made of a material having a structure similar to phospholipids of cell membranes. An example of the coating material is Lipidure (registered trademark, manufactured by NOF CORPORATION). If Lipidure is used, then it is dissolved in a buffer liquid such as a TBE buffer so that it has a concentration of 0.5 wt %, and the solution is filled in the flow passage, and then left to stand for several minutes to thereby coat the flow passage walls.

Alternatively, the flow passage walls may be coated with fluoroplastics or bovine serum albumin to prevent molecules of DNA from sticking to the flow passage walls.

### (Example 1)

Fabrication of a separator according to Example 1 will be described below.

Fig. 24a shows in cross section an apparatus for carrying out the above anodic oxidization process. Aluminum was evaporated to a film thickness of 500 nm on slide glass plate 301 by an E-gun evaporating apparatus, forming aluminum layer 302. Then, the positive and the negative electrodes of DC power supply 307 were connected to aluminum layer 302 and platinum electrode 306, respectively, which were dipped in electrolytic solution 304 of 0.3 mol/L of phosphoric acid.

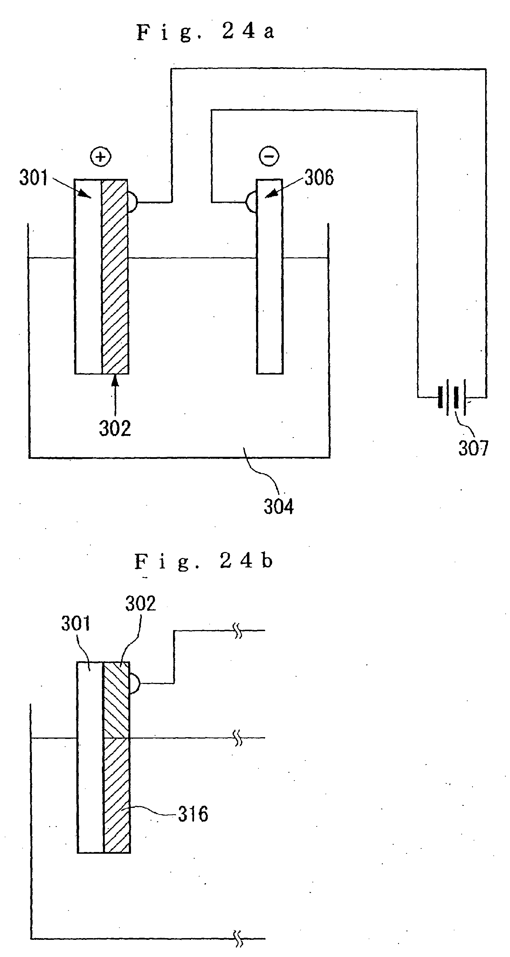

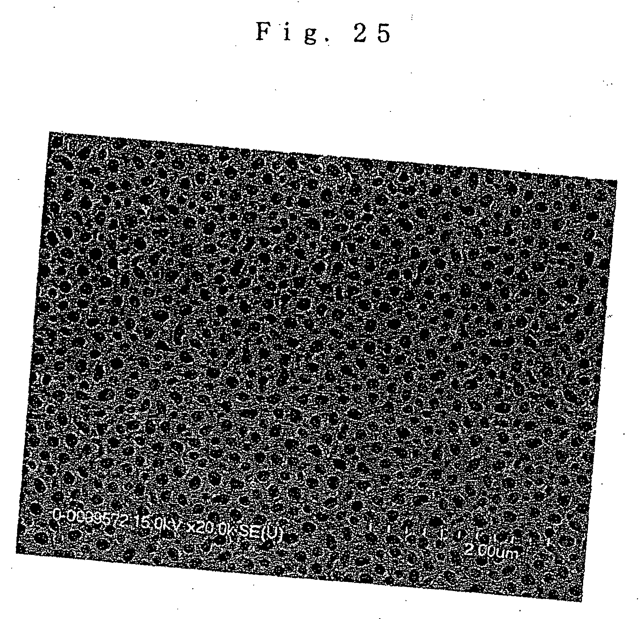

DC power supply 307 was set to a voltage of 130 V, and supplied a current for about 5 minutes until any current was completely stopped, thereby performing anodic oxidization to form porous alumina layer 316, as shown in Fig. 24b. Then, DC power supply 307 is disconnected from aluminum layer 302, and slide glass plate 301, aluminum layer 302, and porous alumina layer 316 were removed from electrolytic solution 304. Porous alumina layer 316 was then surface-treated by being dipped in 5 wt % of phosphoric acid at 30°C for 40 minutes, forming recesses having a diameter ranging from 120 to 150 nm, a depth of 500 nm, and spaced at intervals of about 250 nm. Fig. 25 shows a scanning electron microscope photograph of the surface of the porous alumina layer.

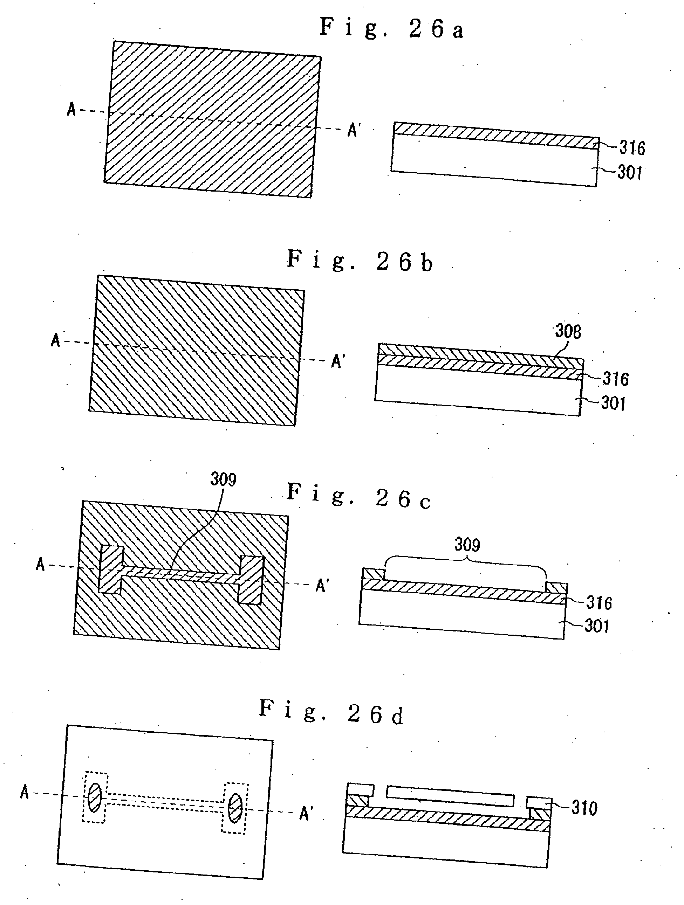

A process of forming a flow passage will be described below with reference to Figs. 26a through 26d. Each of Figs. 26a through 26d ontains a plan view on its left side and a cross-sectional view on its right side which is taken along line A - A' of the plan view.

Fig. 26a shows porous alumina layer 316 and slide glass plate 301 which were fabricated as described above. Photo-setting resin layer 308 was formed on porous alumina layer 316 according to a spin coating process using photo-setting resin Aronix UV-3750 (Toa Gosei Co., Ltd.), as shown in Fig. 26b. The spin coating process was performed under the conditions of 800 rpm, 5 seconds for the first time and 6000 rpm, 30 seconds for the second time. Then, while a portion to be formed into a flow passage was being masked, photo-setting resin layer 308 was exposed according to a pattern at 13 mW/cm² for 60 seconds. Thereafter, photo-setting resin layer 308 was developed with methyl isobutyl ketone for one minute and with isopropanol for 30 seconds, and then UV was applied to photo-setting resin layer 308, thus forming flow passage 309 shown in Fig. 26c. Flow passage 309 had a length of 1.4 mm, a width of 80 µm, and a depth of about 3 µm.

Cover glass plate 310 having a recess of a diameter of 2 mm was pressed against photo-setting resin layer 308 thus formed, as shown in Fig. 26d.

The flow passage of the separator thus obtained was observed. No recess covered with the photo-setting resin was recognized, and no liquid leakage from the wall passage walls was confirmed.

Then, the peripheral edge of the recess defined in cover glass plate 310 was bonded to a glass tube having an inside diameter of 3 mm, an outside diameter of 5 mm, and a height of 5 mm by epoxy resin, producing reservoirs. Then, 1 × TBE buffer (0.09 M of trisborate + 2 mM of EDTA) was introduced. Thereafter, a buffer containing 100 DNA molecules of 165 kbp was introduced from one of the reservoirs. Thereafter, platinum wires were inserted into the reservoirs, and a voltage of 40 V was applied thereto for electrophoresis of the DNA molecules. The same process was performed on 10 kbp and 5 kbp DNA molecules. The migration speed of DNA molecules was determined as follows: The DNA molecules were treated with a fluorescent dye YOYO-1 (manufactured by Molecular Probe), and imaged at an enlarged scale of 1000 times by a fluorescence microscope. The produced image was intensified in sensitivity by an image intensifier (manufactured by Hamamatsu Photonics), and the individual DNA molecules were traced.

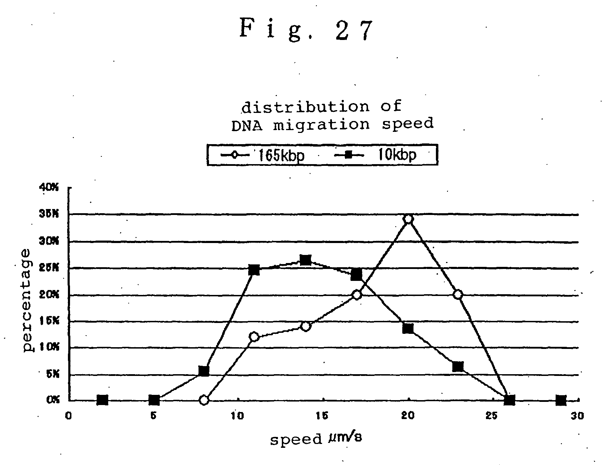

Fig. 27 is a graph showing the distributions of DNA migration speeds of 100 DNA molecules of each of the sizes which were traced. The average migration speeds of 165 kbp and 10 kbp DNA molecules were 16.5 µm/x and 13.6 µm/x, respectively. It was recognized that DNA molecules of different sizes exhibited different migration speed distributions, suggesting that the separator had a separating capability.

The above result based on the measurement of 100 DNA molecules of each of sizes indicated that while the shoulders of the migration speed distribution curves of both DNA molecule sizes appear wide, the separator had a sufficiently high separating capability for the following reasons: It is known that if the number of molecules to be traced is N, then the standard deviation of the peak becomes smaller in proportion to 1/N^{1/2} (central limit theorem). Generally, since a band produced by electrophoresis contains about several hundred thousand (10⁷) DNA molecules, if the same number of DNA molecules were traced, then the standard deviation of the peak is reduced to 1/100000^{1/2}, i.e., about 0.003 times, as compared with 100 DNA molecules. Therefore, the peak of the DNA molecules separated by the recesses should be highly sharp.

Buffers containing 165 kbp and 10 kbp DNA molecules were applied to the above separator, and the peak retention times were measured accurately. As shown in Table 1 below, the peak retention times of 165 kbp and 10 kbp DNA molecules were 84 seconds and 105 seconds, respectively, indicating that the DNA molecules were separated from each other.

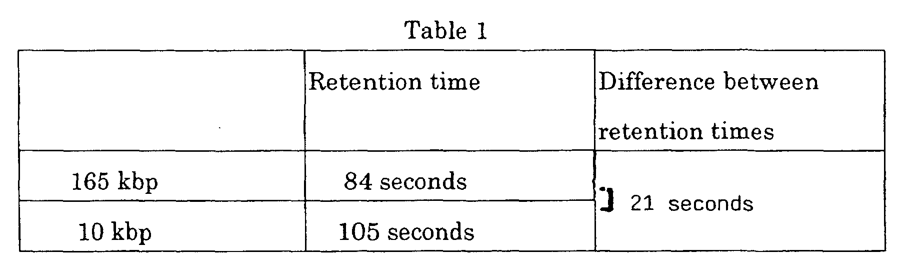

For comparison, the results of an electrophoretic analysis using a separator (Bioanalyzer) manufactured by Agilent Technologies, which has a separating flow passage having a length of 14 mm, are shown in Table 2 below. While the separating capabilities of the separator according to Example 1 and the Agilent's separator cannot be compared with each other as the sizes of DNA molecules to be separated are not the same, the Agilent's separator separated DNA molecules of different sizes with a retention time difference ranging from 2 to 4 seconds, and the separator according to Example 1 separated 165 kbp and 10 kbp DNA molecules with a longer retention time difference of 21 seconds. Therefore, it can be seen that the separator according to Example 1 has an excellent separating capability. Because the separator according to Example 1 achieves its separating capability with a much shorter separating flow passage than the Agilent's separator, it was proved that the separator according to Example 1 is excellent with a high number of theoretical plates. The Agilent's separator operates on the basis of electrophoresis using a gel, and fails to analyze 165 kbp DNA molecules as they are too large and tend to clog the separator. However, the separator according to Example 1 is not clogged and can smoothly analyze DNA molecules.

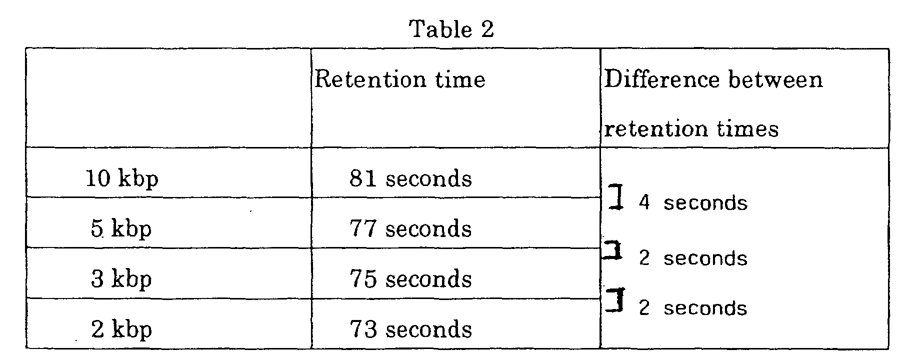

It was thus proven that the separator according to Example 1 has an excellent separating capability. The separator according to Example 1 was applicable to large molecules such as 165 kbp DNA molecules which cannot be analyzed by conventional separators because of possible clogging. Therefore, the separator according to Example 1 has proven useful.

In addition to the above examples, a separation experiment for confirming the performance of the separator according to the present invention was conducted.

A chip used in the experiment was produced as follows: First, a porous alumina substrate was fabricated. Specifically, a slide glass plate having a size of 50 mm × 76 mm was cleansed with acetone and SPM, and then a thin aluminum film was formed to a thickness of 1 µm on the surface of the slide glass plate by sputtering. Then, the surface of the thin aluminum film was processed by anodic oxidization with an electrolytic liquid of 0.3 M of phosphoric acid under the conditions of 2°C and 140 V until the current stopped. The porous alumina film produced as a result of the anodic oxidization was dipped in 3 wt % of phosphoric acid at 30°C for 60 minutes, thus increasing the diameters of the pores in the porous alumina film. The final diameters of the pores were in the range from 150 nm to 200 nm (the pores had an average diameter of 170 nm).

The porous alumina substrate thus fabricated was coated with an UV-curable resin (Aronix UV-3750 manufactured by Toa Gosei Co., Ltd.) having a thickness of 3 µm by a spin coating process under the conditions of 800 rpm and 5 seconds and 6000 rpm and 30 seconds. Thereafter, the UV-curable resin was exposed for 60 seconds while masking a flow passage pattern, and then developed with acetone for 30 seconds. Ultraviolet radiation was then applied to harden the resin, thus forming a separating flow passage and a specimen introducing flow passage. The flow passage pattern had a shape in which the separating flow passage having a width of 80 µm and a length of 40 mm and the specimen introducing flow passage having the same width as the separating flow passage and a length of 30 mm perpendicularly cross each other at their midpoints.

Finally, a cover glass plate with a reservoir hole defined therein was bonded to the substrate with the flow passages defined therein based on the adhesion of the UV-curable resin. A glass tube reservoir and a platinum electrode were attached to the substrate by an epoxy-based adhesive.

DNA molecules which were 10 kbp and 165 kbp (T4 phage) long were used as a specimen. They were dyed with YOYO-1 (the fluorescent dye described above) for observation. The lengths of the DNA molecules were selected in order to be able to determine, with ease, which length of DNA molecules was observed from the intensity of the fluorescent light and the molecular shape. The specimen containing the DNA molecules having those two lengths was introduced in a pulsed succession into the separating flow passage according to the following procedure: To introduce the specimen in a pulsed succession, it was introduced into an end of the specimen introducing flow passage, and then into the specimen introducing flow passage by applying a voltage of - 50 V to the end thereof and a voltage of 0 V to the other end thereof. At this time, the opposite ends of the separating flow passage were held at 0 V to prevent the specimen from being diffused. Then, the voltages applied to the specimen introducing passage were inverted for 0.5 second to pull back the specimen, thereby reducing the width of a portion of the specimen in the separating flow passage. Finally, the voltage at the close end of the separating flow passage was set to - 100 V, the voltage at the far end of the separating flow passage to 0 V, and the voltages at the opposite ends of the specimen introducing flow passage to 0 V to introduce only a narrow pulsed band of the specimen which is present at the crossing point of the specimen introducing flow passage and the separating flow passage into the separating flow passage while preventing the specimen from being further pulled in from the specimen introducing flow passage.

As the introduced specimen passed through the separating flow passage, it was separated into two bands according to the lengths of the DNA molecules. The amount of fluorescent light was measured at a position spaced 5 mm downstream from the crossing point of the specimen introducing flow passage and the separating flow passage. Specifically, a fluorescence microscope was used, and when the dyed DNA molecules were excited by a fluorescence lamp, they emit fluorescence light depending on the lengths of the DNA molecules. The emitted fluorescence light was detected by a photomultiplier (H7467 manufactured by Hamamatsu Photonics) mounted on the fluorescence microscope, and a signal from the photomultiplier which represents the intensity of the detected fluorescence light was recorded. At the same time, the flowing molecules were observed at a magnification of 1000 with a half-silvered mirror to confirm which size of DNA molecules was flowing.

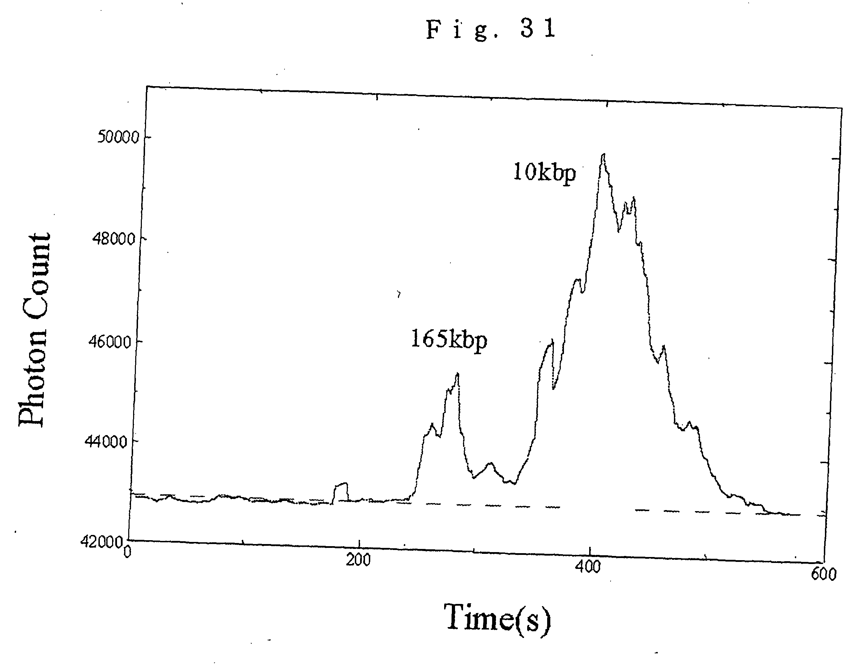

Fig. 31 is a graph having a vertical axis representative of the intensity of the signal from the photomultiplier and a horizontal axis representative of the time from the start of the introduction of the specimen. From the time when the specimen started to be introduced, the DNA molecules of 165 kbp formed a first peak in 270 seconds, and then the DNA molecules of 10 kbp formed a peak in about 410 seconds. It can be seen from these results that the separator functioned like a gel-filtration separating mechanism which allows molecules to flow smoothly in the order of greater sizes and which is less liable to become clogged. Heights equivalent to theoretical plates (HETP) were calculated based on the above results. The HETP for the DNA molecules of 165 kbp was 9.7 µm, and the HETP for the DNA molecules of 10 kbp was 32 µm. The HETP is a measure of the separating capabilities, and represents a higher separating capability as it is smaller. The HEPT of an ordinary gel-filtration column, e.g., a column used to separate biopolymer molecules including DNA molecules, is generally in the range from 10 µm to 100 µm. For example, the HEPT of a commercially available column, Ohpack SB-80 series (manufactured by Showa Denko K.K.) is 25 µm, and the HEPT of a high-separating-capability column GPC KF-40 series manufactured by Showa Denko K.K. is 10 µm. Therefore, it can be understood that the separator according to the present invention provides about the same separating capability in terms of the HETP as those columns with a rectangular chip which is several centimeters long on each side.

The separator according to Example 1 used photo-setting resin Aronix UV-3750 (Toa Gosei Co., Ltd.). However, the above separator can be produced using other resin materials. For example, a flow passage can be produced by providing a resin layer of photosensitive polyimide resin and exposing it according to a pattern. The photosensitive polyimide resin may be CRC-3800 manufactured by SUMITOMO BAKELITE COMPANY LIMITED.

### (Example 2)

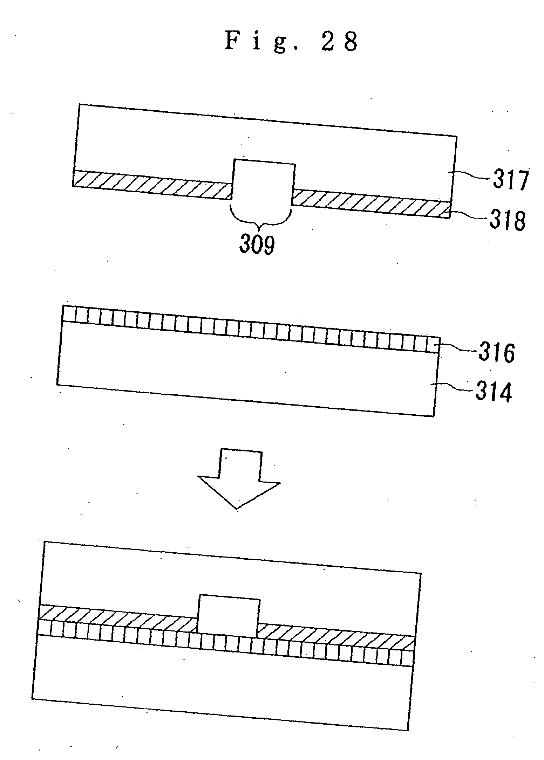

According to Example 1, after a photo-setting resin layer was formed on a porous alumina layer, a flow passage was formed. According to Example 2, as shown in Fig. 28, adhesive layer 318 was formed by applying an adhesive resin to silicon substrate 317 having flow passage 309 defined therein by etching. Thereafter, porous alumina layer 316 formed on glass substrate 316 by anodic oxidization was joined to adhesive layer 318, thus producing a separator according to Example 2. The separator lends itself to mass-production because the number of steps involved in manufacturing the separator is small.

### (Example 3)

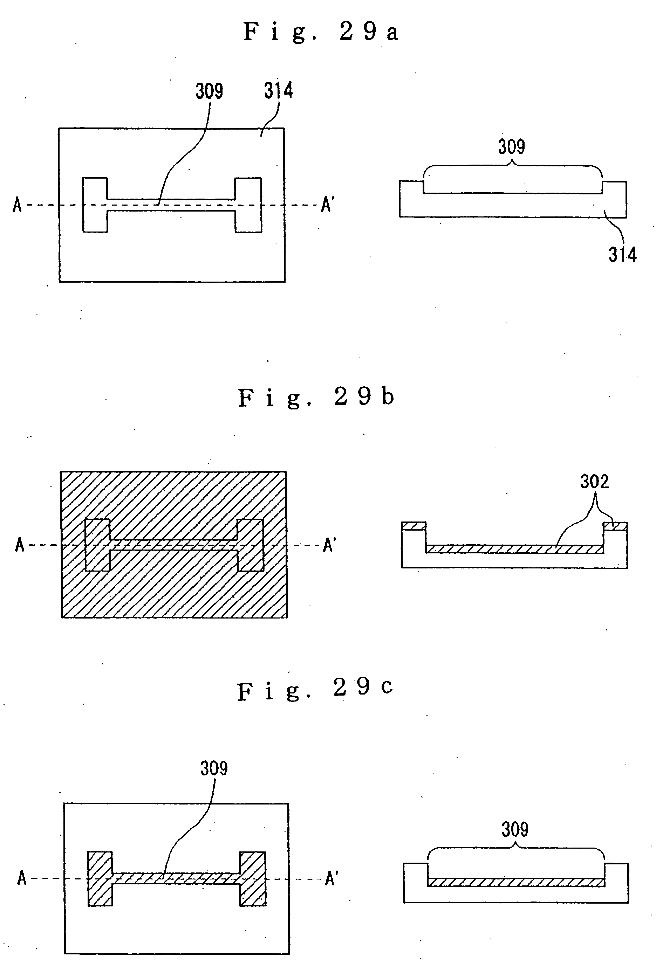

A separator according to Example 3 will be described below with reference to Figs. 29a through 29g. Each of Figs. 29a through 29g contains a plan view on its left side and a cross-sectional view on its right side which is taken along line A - A' of the plan view.

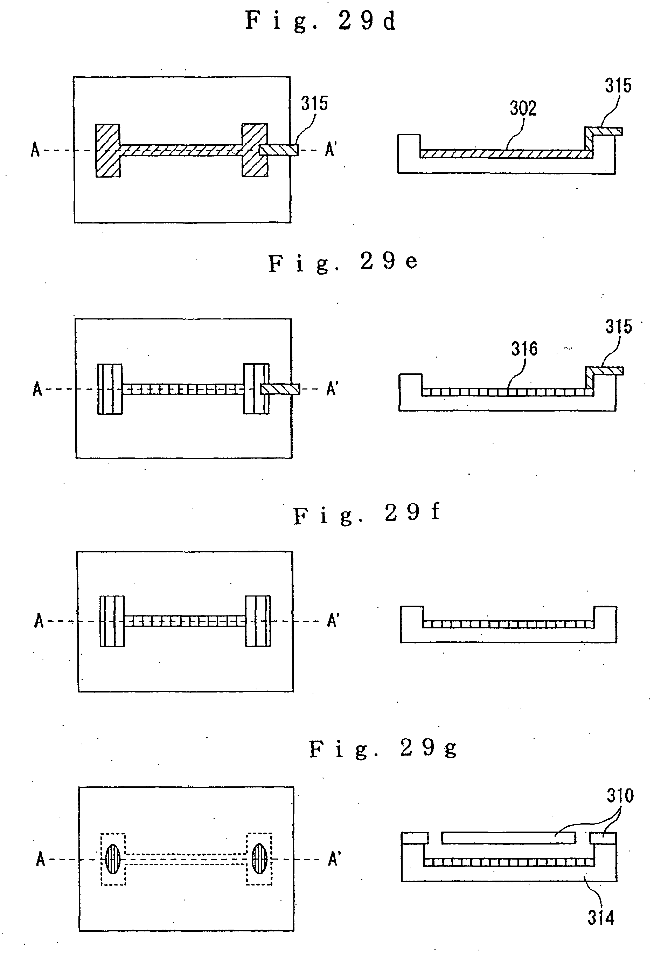

Flow passage 309 was formed on glass substrate 314 as shown in Fig. 29a. Then, aluminum was evaporated on glass substrate 314 by sputtering, producing aluminum layer 302 having a thickness of 500 nm, as shown in Fig. 29b. Thereafter, aluminum layer 302 was removed, except its portion in flow passage 309, by a dual damascene process, as shown in Fig. 29c. Then, as shown in Fig. 29d, leader electrode 315 of gold was connected to aluminum layer 302, and the assembly was processed for anodic oxidization as described in Example 1. Fig. 29e shows the assembly after being processed for anodic oxidization. With the alumina layer being subjected to anodic oxidization, porous alumina layer 316 was formed in flow passage 309. Then, leader electrode 315 was removed by potassium iodide, as shown in Fig. 29f, and then glass substrate 314 and cover glass plate 310 with recesses defined therein are bonded to each other by glass melting, as shown in Fig. 29g.

The separator according to Example 3 is able to effectively prevent liquid leakage as the flow passage is closed by the glass substrate and the cover glass. The separator according to Example 3 can be manufactured efficiently and stably as its structure and manufacturing process are simple.

### (Example 4)

A separator according Example 4 has recesses shaped as shown in Fig. 11c.

According to Example 4, a silicon substrate was used. Vertical recesses having an inside diameter of about 10 nm were formed in the silicon substrate by dry etching using a chlorine gas and oxygen. Then, the vertical recesses were subjected to wet etching using an etching liquid composed of nitric acid : hydrofluoric acid : acetic acid = 1 : 1 : 1 (volume ratio). As a result, it was confirmed that tapered recesses having an opening having diameters ranging from 120 to 150 nm and a bottom having diameters ranging from 20 to 30 nm were formed in the silicon substrate.

A flow passage was then formed in the silicon substrate and a cover glass plate was bonded to the silicon substrate in the same manner as in Example 1, thus producing a separator according to Example 4.

### (Example 5)

A separator according to Example 5 had flow passage 309 divided into two passageways by separating plate 319 having recesses 321 and through recesses 320 as shown in Figs. 12a and 12b.

Recesses 321 in separating plate 319 were formed by an anodic oxidization process in the same manner as in Example 1. Thereafter, a portion of separating plate 319 was dipped in an electrolyte, and processed for anodic oxidization until through recesses 320 were formed. Then, the assembly was surface-treated in the same manner as in Example 1, producing separating plate 319 having recesses 321 and through recesses 320. Separating plate 319 thus produced and silicon substrate 317 with flow passage 309 formed by etching were bonded to each other by an adhesive resin, producing the separator shown in Figs. 12a and 12b.

### (Example 6)

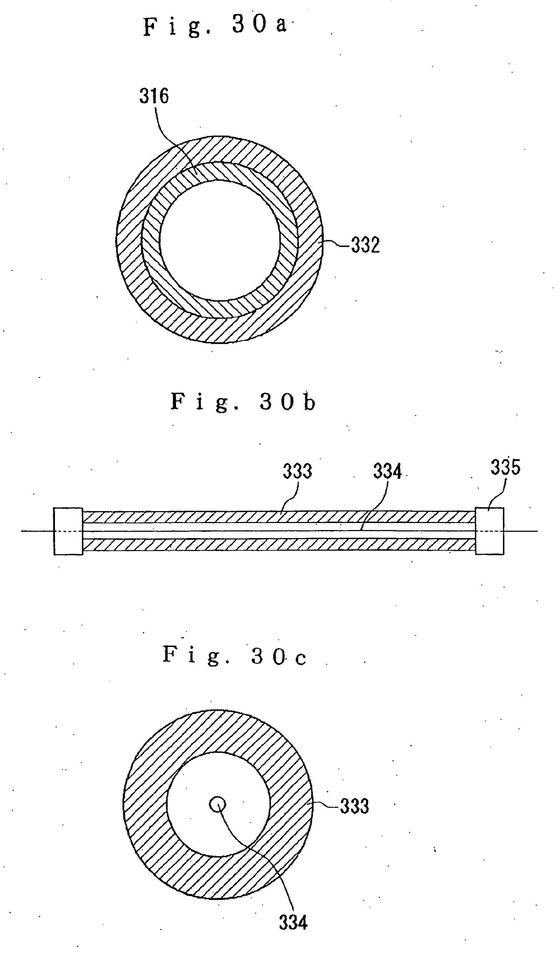

A separator according to Example 6 was a tubular separator. Fig. 30a is a cross-sectional view of the tubular separator. As shown in Fig. 30a, the tubular separator had porous alumina layer 316 and aluminum layer 332 which were disposed concentrically with each other. The separator according to Example 6 can be fabricated as follows:

As shown in Fig. 30b, aluminum tube 333 and a pulled platinum wire 334 are set on a holder 335, and aluminum tube 333 is filled with an electrolytic liquid. At this time, as shown in Fig. 30c, platinum wire 334 is positioned centrally in aluminum tube 333. Then, the assembly was processed for anodic oxidization to form porous alumina layer 316 in aluminum tube 333, as shown in Fig. 30a. The separator thus produced is connected to a pump, and a specimen introduced into the aluminum tube was moved and separated by the pump. The separated specimen can be obtained by dispensing a buffer discharged from the aluminum tube.

Since the separator according to Example 6 has an aluminum tube, it is advantageous in that the length thereof can be selected freely, and the aluminum tube can be bent, thus providing a wide variety of separator layouts to choose from.

## Claims

1. A separator comprising:
a flow passage for a specimen to pass therethrough; and
a specimen separating area having a plurality of recesses defined in an inner wall of said flow passage.

2. A separator comprising:
a flow passage for a specimen, defined as a groove in a substrate;
a specimen inlet for introducing the specimen into said flow passage;
a specimen separating area disposed in said flow passage and having a plurality of recesses defined in an inner wall of said flow passage; and
a specimen retriever for analyzing or dispensing the specimen separated by said specimen separating area.

3. A separator according to claim 2, further comprising:
a resin layer disposed on said substrate, said groove being defined in said resin layer.

4. A separator according to claim 3, wherein said resin layer is made of a photo-setting resin.

5. A separator according to claim 1 or 2, further comprising:
means for applying an external force to a component to be separated from said specimen.

6. A separator according to claim 1 or 2, wherein said specimen includes nucleic acid or protein.

7. A separator according to claim 1 or 2, wherein said recesses are formed by anodic oxidization.

8. A separator according to claim 1 or 2, wherein said recesses are tapered and have openings whose maximum diameter is greater than the maximum diameter of bottoms of said recesses.

9. A separator according to claim 1 or 2, wherein said inner wall of the flow passage is hydrophilic.

10. A separator according to claim 1 or 2, wherein said flow passage is divided into a plurality of passageways by a partition, said partition having a plurality of recesses defined therein which communicate between said passageways.

11. A separator according to claim 10, wherein said partition has a plurality of recesses defined in at least one of the surfaces thereof.

12. A separator according to claim 10, wherein said partition has a plurality of recesses defined in both surfaces thereof, the recesses defined in one of the surfaces having openings whose maximum diameter is different from the maximum diameter of openings of the recesses defined in the other surfaces.

13. A separator according to claim 1 or 2, further comprising:
a projection disposed in said specimen separating area and having a plurality of recesses defined therein.

14. A separator according to claim 1 or 2, further comprising:
voltage applying means for applying a voltage to said flow passage in a direction different to the direction in which the specimen travels in said flow passage.

15. A separator according to claim 1 or 2, wherein said flow passage comprises a plurality of flow passages, further comprising a specimen introducing flow passage extending across said flow passages.

16. A separator according to claim 15, further comprising a plurality of pillars disposed between the points of intersection between said flow passages and said specimen introducing flow passage, and said specimen separating area.

17. A method of manufacturing a separator, comprising the steps of
forming a flow passage for a specimen to pass therethrough, in a substrate; and
forming a plurality of recesses in an inner wall of said flow passage by anodic oxidization.

18. A method according to claim 17, wherein a voltage is continuously lowered in said step of forming a plurality of recesses.

19. A method according to claim 17 or 18, wherein said step of forming a flow passage comprises the steps of:
providing a resin layer on said substrate; and
forming a groove in said resin layer.

20. A method according to claim 19, wherein said resin layer is made of a photo-setting resin.

21. A method of manufacturing a separator, comprising the steps of:
forming a groove to serve as a flow passage, in a surface of each of a pair of substrates; and
joining said substrates and a plate member which has a plurality of recesses defined therein, to each other while the surfaces with the grooves defined therein are facing each other and said plate member is being interposed between said substrates.

22. A method according to claim 21, wherein said plate member further has a plurality of specimen separating recesses defined therein.
